# EUROPEAN PATENT SPECIFICATION

(11) **EP 3 988 628 B1**
(45) Date of publication and mention of the grant of the patent: **05.03.2025**
(21) Application number: 21827534.5
(22) Date of filing: 01.07.2021
(51) Int. Cl.: C09J 161/14, C08G 8/28, B27D 1/04, B27D 1/08, B27G 11/00

(54) **MODIFIED PHENOLIC RESIN ADHESIVE, PREPARATION METHOD THEREFOR AND APPLICATION THEREOF**
MODIFIZIERTER PHENOLHARZKLEBSTOFF, VERFAHREN ZU SEINER HERSTELLUNG UND SEINE VERWENDUNG
ADHÉSIF DE RÉSINE PHÉNOLIQUE MODIFIÉE, PROCÉDÉ DE PRÉPARATION ASSOCIÉ ET APPLICATION CORRESPONDANTE

(30) Priority: 02.07.2020 CN 202010633599
(43) Date of publication of application: 27.04.2022
(73) Proprietor: Shanghai Changfa New Materials Co., Ltd., Shanghai 200030 (CN)
(72) Inventor: SHI, Quentin, Shanghai 200030 (CN); SUN, Haiqiang, Shanghai 200030 (CN); ZHAO, Ji, Shanghai 200030 (CN)
(74) Representative: Bayramoglu et al.
(86) International application number: PCT/CN2021/103929
(87) International publication number: WO 2022/002179

(56) References cited:
- CN-A- 101 348 698
- CN-A- 103 113 840
- CN-A- 109 679 044
- CN-A- 110 894 409
- CN-A- 111 073 560
- CN-A- 111 154 437
- CN-A- 111 944 464
- GB-A- 1 382 964
- US-A- 4 324 747

## Description

### TECHNICAL FIELD

The present disclosure relates to use of a modified phenol-formaldehyde resin adhesive for flooring base material.

### BACKGROUND

In 2010, the global phenol-formaldehyde resin output was about 4.8 million tons, of which the phenol-formaldehyde resin adhesive accounted for about 33%. China is the largest producer of wood-based panels worldwide. In 2011, 235 million m³ of wood-based panels were produced in China, and about 10 million tons of wood adhesives were consumed correspondingly. The wood adhesives mainly include phenol-formaldehyde, urea-formaldehyde, and melamine-formaldehyde resins. The phenol-formaldehyde resin adhesive shows the advantages of high bonding strength, excellent water resistance, and prominent weather resistance due to its unique meshed cross-linked molecular structure, and thus has attracted much attention. However, as there are pros and cons to everything, the raw materials, i.e. phenol and formaldehyde, for producing the phenol-formaldehyde resin adhesive are respectively group 2 carcinogen and group 1 carcinogen, both of which are highly toxic. Long-term exposure to the phenol-formaldehyde resin will cause serious potential damage to the health of an operator. In addition, when the phenol-formaldehyde resin adhesive is used for hot pressing of panels, a temperature of pressed panels tends to remain high.

With the increasing shortage of petroleum resources and the rising price of petrochemical raw materials, the large-scale production and application of phenol-formaldehyde resin adhesives for wood-based panels are increasingly restricted. Papermaking waste mainly comes from a pulping process of a paper mill. Massive papermaking waste is difficult to be treated, and thus has become a major problem in the papermaking industry.

Therefore, there is an urgent need in the art to develop a phenol-formaldehyde resin adhesive that has a strong binding force among molecules, can reduce the volatilization of phenol and formaldehyde, involves widely-available raw materials, consumes less amount of phenol and formaldehyde, realizes the effective resource utilization, and leads to a low temperature for pressed panels and is suitable as an adhesive in the preparation of a flooring base material.

### SUMMARY

A technical problem to be solved by the present disclosure: In order to overcome the defects in the art that the preparation of existing phenol-formaldehyde resin adhesives involves large phenol and formaldehyde consumption, an existing phenol-formaldehyde resin adhesive shows weak intermolecular bonding during use such that phenol and formaldehyde volatilize a lot, a temperature of pressed panels is high when an existing phenol-formaldehyde resin adhesive is used for hot pressing of the panels, and the papermaking waste is produced in large quantities and used in small quantities, the present disclosure provides a modified phenol-formaldehyde resin adhesive, and a preparation method and use thereof. In the present disclosure, the modified phenol-formaldehyde resin adhesive is suitable for use as an adhesive in the preparation of a flooring base material. The modified phenol-formaldehyde resin adhesive is synthesized by a staged method, where a papermaking waste is first allowed to initially react with formaldehyde to increase the reaction activity of the structure and improve the reaction efficiency; the papermaking waste is used as a raw material to reduce the consumption of phenol and formaldehyde, thereby achieving the change from waste to treasure; and the prepared phenol-formaldehyde resin adhesive has strong intramolecular interaction, which reduces the volatilization of phenol and formaldehyde and also lowers a temperature for hot pressing.

The inventors have made improvements through a large number of experimental studies during a research and development process, and have found that a composition of the papermaking waste is diverse and complex, including many macromolecular aromatic compounds with benzene rings, which can modify the phenol-formaldehyde resin adhesive to some extent. In terms of the preparation process, the papermaking waste is first allowed to react with formaldehyde to promote the formation of a hydroxymethyl structure, which can effectively increase the reaction activity of the papermaking waste and improve the reaction efficiency, thereby enabling a complete reaction. The use of the papermaking waste can reduce the consumption of phenol and formaldehyde, improve the intermolecular binding to effectively reduce the volatilization of phenol and formaldehyde and reduce the content of free aldehyde, and appropriately reduce a temperature for hot pressing. The papermaking waste is used to modify the phenol-formaldehyde resin adhesive, such that the papermaking waste can be effectively reused and thus changed into treasure, which can not only relieve the pressure that the papermaking waste is difficult to deal with, but also solve the technical problems in the synthesis and later use of existing phenol-formaldehyde resin adhesives and can be used as an adhesive in the preparation of a flooring base material.

The present disclosure adopts the following technical solutions to solve the above technical problem:
The present disclosure provides a use of a modified phenol-formaldehyde resin adhesive as an adhesive in the preparation of a flooring base material, wherein the modified phenol-formaldehyde resin adhesive is obtainable by a preparation method comprising the following steps:
(1) mixing a papermaking waste, a catalyst, and water, and subjecting a resulting mixture to a reaction with formaldehyde to obtain a modified papermaking waste;
(2) mixing a mixture of phenol and a catalyst with formaldehyde to allow a reaction to obtain a material A; and
(3) subjecting the material A to a reaction with the modified papermaking waste, and testing a material obtained from the reaction at 40°C using a TU-4 viscosity cup, and when an outflow time is 18 s to 22 s, collecting the material;
where steps (1) and (2) can be conducted in any order.

In step (1), the papermaking waste can be a papermaking waste conventionally produced during a papermaking process in the art, which may preferably be one or more from the group consisting of a papermaking slime pulp, a pulp residue, a bark, a grass powder, a silicon-containing white mud, and a spent pulping liquor, and may more preferably be a spent pulping liquor.

A specific preparation method of the spent pulping liquor may include: (a) selecting and pre-steaming a pulping raw material; (b) mixing the pulping raw material with water in a mass ratio of 1:(3-10), pumping a resulting aqueous pulping raw material solution with a pump to a top of an independent continuous hydrolysis tower, and subjecting the pulping raw material to a hydrolysis reaction at 120°C to 180°C for 1 h to 4 h; and after the hydrolysis reaction is completed, collecting a hydrolysate from a lower part of the hydrolysis tower; and (c) cooking the pulping raw material undergoing hydrolysis through a sulfate process as follows: placing the pulping raw material undergoing hydrolysis in a cooking vat, uniformly adding an available alkali to the cooking vat from the top, and cooking at 140°C to 170°C for 1 h to 4 h, where the available alkali is added at an amount 16% to 24% of an absolute dry amount of the pulping raw material (calculated based on NaOH), the available alkali has a sulfidity of 20% to 40%, and a mass ratio of the pulping raw material to water is 1:(3-6); and after the cooking is completed, collecting a dissolving pulp, and filtering the remaining material in the cooking vat to obtain the spent pulping liquor.

Preferably, a preparation method of the spent pulping liquor may include: a. selecting and pre-steaming a pulping raw material; b. mixing the pulping raw material with water in a mass ratio of 1:5, pumping a resulting aqueous pulping raw material solution with a pump to a top of an independent continuous hydrolysis tower, and subjecting the pulping raw material to a hydrolysis reaction at 165°C for 2 h; and after the hydrolysis reaction is completed, collecting a hydrolysate from a lower part of the hydrolysis tower; and c. cooking the pulping raw material undergoing hydrolysis through a sulfate process as follows: placing the pulping raw material undergoing hydrolysis in a cooking vat, uniformly adding an available alkali to the cooking vat from the top, and cooking at 150°C for 2 h, where the available alkali is added at an amount 18% of an absolute dry amount of the pulping raw material (calculated based on NaOH), the available alkali has a sulfidity of 28%, and a mass ratio of the pulping raw material to water is 1:5; and after the cooking is completed, collecting a dissolving pulp, and filtering the remaining material in the cooking vat to obtain the spent pulping liquor.

The pulping raw material may include: conventionally used wood (including *Picea jezoensis*, *Abies holophylla*, *Picea asperata*, *Abies nephrolepis*, *Pinus koraiensis*, *Larix gmelinii*, *Pinus massoniana*, *Populus* L., *Betula*, *Eucalypt*, *Tilia*, and the like), bamboo, grass (rice straw, wheat straw, reed, bagasse, and the like), bast fiber (hemp fiber, mulberry bark, *Pteroceltis tatarinowii* bark, and the like), and cotton fiber (cotton linter and the like). The pulping raw material may preferably be *Eucalypt.*

In step (1), the catalyst may be an alkaline substance conventionally used in the art, which may preferably be an aqueous sodium hydroxide solution with a mass percentage of 32%. The mass percentage refers to a mass percentage of sodium hydroxide in the aqueous sodium hydroxide solution.

In step (1), the water can be water conventionally used in the art, which may generally be deionized water.

In step (1), when the papermaking waste accounts for 10 parts by weight, the catalyst may account for 7.1 to 22.5 and preferably 16 to 17.5 parts by weight, such as 16.7 or 17.1 parts by weight.

In step (1), when the papermaking waste accounts for 10 parts by weight, the water may account for 10 to 30 and preferably 11 to 13 parts by weight, such as 12.5 or 12.8 parts by weight.

In step (1), when the papermaking waste accounts for 10 parts by weight, the formaldehyde may account for 0.2 to 3 and preferably 1 to 3 parts by weight, such as 2.5 or 2.86 parts by weight. The formaldehyde may generally be added in the form of an aqueous formaldehyde solution. The aqueous formaldehyde solution may have a mass percentage of 37%, and the mass percentage refers to a mass percentage of formaldehyde in the aqueous formaldehyde solution. The parts by weight of formaldehyde mentioned in the present disclosure refer to parts by weight of formaldehyde in the aqueous formaldehyde solution.

In step (1), a temperature of the reaction can be a conventional temperature of such an operation in the art, which may be preferably 50°C to 80°C and more preferably 50°C to 70°C.

In step (1), a time of the reaction can be a conventional time of such an operation in the art, which may be preferably 30 min to 120 min and more preferably 80 min to 120 min.

In the present disclosure, after step (1) is completed, the preparation method may further include a cooling treatment.

Conditions and methods for the cooling treatment can be conventional conditions and methods for such an operation in the art, and the cooling treatment may generally refer to cooling to 25°C to 30°C and preferably 28°C to 30°C.

In step (2), the catalyst may be an alkaline substance conventionally used in the art, which may preferably be an aqueous sodium hydroxide solution with a mass percentage of 32%.

In step (2), when the modified papermaking waste accounts for 10 parts by weight, the catalyst may account for 2.2 to 12.5 and preferably 5 to 6 parts by weight, such as 5.6 or 5.7 parts by weight.

In step (2), when the modified papermaking waste accounts for 10 parts by weight, the phenol may account for 7.7 to 30 and preferably 13 to 18 parts by weight, such as any one from the group consisting of 13.3, 14.3, and 17.5 parts by weight.

In step (2), when the modified papermaking waste accounts for 10 parts by weight, the formaldehyde may account for 4 to 19.5 and preferably 7 to 10 parts by weight, such as any one from the group consisting of 7.9, 8.6, and 9.25 parts by weight. The formaldehyde may generally be added in the form of an aqueous formaldehyde solution. The aqueous formaldehyde solution may have a mass percentage of 37%, and the mass percentage refers to a mass percentage of formaldehyde in the aqueous formaldehyde solution. The parts by weight of formaldehyde mentioned in the present disclosure refer to parts by weight of formaldehyde in the aqueous formaldehyde solution.

In step (2), a temperature of the mixing can be a conventional temperature of such an operation in the art, which may be preferably 40°C to 60°C and more preferably 40°C to 50°C.

In step (2), a time of the reaction can be a conventional time of such an operation in the art, which may be preferably 20 min to 40 min and more preferably 30 min to 40 min.

In step (2), the reaction may be conducted in a temperature-programmed manner.

The temperature-programmed manner may refer to raising a temperature to 70°C to 90°C within 20 min to 40 min and preferably to 80°C to 90°C within 20 min to 40 min.

In step (3), a temperature of the reaction can be a conventional temperature of such an operation in the art, which may be preferably 85°C to 100°C and more preferably 90°C to 100°C.

After the reaction is completed, step (3) may further include a cooling treatment.

Conditions and methods for the cooling treatment can be conventional conditions and methods for such an operation in the art, and the cooling treatment may preferably refer to cooling to 30°C to 40°C.

In the present disclosure, the modified phenol-formaldehyde resin adhesive may require an outflow time of 18 s to 22 s and preferably 18 s to 19 s when tested in a TU-4 viscosity cup at 40°C. The TU-4 viscosity cup is used to test a viscosity of the adhesive according to GB/T1723-93 under conditions for a viscosity test of other related products. That is, at 40°C, the time for 100 mL of a sample to completely flow out from a hole with a diameter of 49.5 cm is determined, which is expressed in s.

On the basis of conforming to common knowledge in the art, the above-mentioned preferred conditions can be combined arbitrarily to obtain preferred examples of the present disclosure.

The reagents and raw materials used in the present disclosure are all commercially available.

Beneficial effects of the present disclosure are as follows: in the present disclosure, the modified phenol-formaldehyde resin adhesive is synthesized by a staged method, where a papermaking waste is first allowed to initially react with formaldehyde, which can effectively increase the reaction activity of the papermaking waste and improve the reaction efficiency, thereby enabling a complete reaction; the use of the papermaking waste can reduce the consumption of phenol and formaldehyde in the production of the modified phenol-formaldehyde resin adhesive; and the prepared phenol-formaldehyde resin adhesive has strong intramolecular interaction, which reduces the volatilization of phenol and formaldehyde and the content of free aldehyde, and also lowers a temperature for hot pressing. The modified phenol-formaldehyde resin adhesive is used as an adhesive in the preparation of a flooring base material

### DETAILED DESCRIPTION OF THE EMBODIMENTS

The present disclosure is further described below through examples, but the present disclosure is not limited to the scope of the described examples. The experimental methods in the following examples which are not specified with specific conditions are conducted according to conventional conditions or according to product instructions.

In the following examples, the papermaking waste is a spent pulping liquor, and a specific preparation method of the spent pulping liquor includes: a. selecting and pre-steaming a pulping raw material; b. mixing the pulping raw material with water in a mass ratio of 1:5, pumping a resulting aqueous pulping raw material solution with a pump to a top of an independent continuous hydrolysis tower, and subjecting the pulping raw material to a hydrolysis reaction at 165°C for 2 h; and after the hydrolysis reaction is completed, collecting a hydrolysate from a lower part of the hydrolysis tower; and c. cooking the pulping raw material undergoing hydrolysis through a sulfate process as follows: placing the pulping raw material undergoing hydrolysis in a cooking vat, uniformly adding an available alkali to the cooking vat from the top, and cooking at 150°C for 2 h, where the available alkali is added at an amount 18% of an absolute dry amount of the pulping raw material (calculated based on NaOH), the available alkali has a sulfidity of 28%, and a mass ratio of the pulping raw material to water is 1:5; and after the cooking is completed, collecting a dissolving pulp, and filtering and concentrating the remaining material in the cooking vat to obtain the spent pulping liquor, which has a pH of 11.

In the following examples, *Eucalypt* chips are used as the pulping raw material.

### Example 1

(1) 40 parts of a papermaking waste, 50 parts of deionized water, and 70 parts of an aqueous sodium hydroxide solution with a mass percentage of 32% were added to a reactor, then 4 parts of an aqueous formaldehyde solution with a mass percentage of 37% were added at 50°C, and a resulting mixture was incubated at the temperature for 120 min, then cooled to 30°C, and discharged to obtain a modified papermaking waste.
(2) 70 parts of phenol and 20 parts of an aqueous sodium hydroxide solution with a mass percentage of 32% were added to a reactor, and stirred and heated for thorough mixing; and then 100 parts of an aqueous formaldehyde solution with a mass percentage of 37% were added at 40°C, and a resulting mixture was heated to 80°C within 40 min to obtain a material A.
(3) 40 parts of the modified papermaking waste prepared in step (1) were added to the material A, and a reaction was conducted at 100°C; and when a reaction product required an outflow time of 18 s at 40°C in a TU-4 viscosity cup, the reaction product was cooled and discharged.

### Example 2

(1) 60 parts of a papermaking waste, 75 parts of deionized water, and 100 parts of an aqueous sodium hydroxide solution with a mass percentage of 32% were added to a reactor, then 15 parts of an aqueous formaldehyde solution with a mass percentage of 37% were added at 70°C, and a resulting mixture was incubated at the temperature for 80 min, then cooled to 25°C, and discharged to obtain a modified papermaking waste.
(2) 100 parts of phenol and 40 parts of an aqueous sodium hydroxide solution with a mass percentage of 32% were added to a reactor, and stirred and heated for thorough mixing; and then 150 parts of an aqueous formaldehyde solution with a mass percentage of 37% were added at 50°C, and a resulting mixture was heated to 90°C within 30 min to obtain a material A.
(3) 70 parts of the modified papermaking waste prepared in step (1) were added to the material A, and a reaction was conducted at 90°C; and when a reaction product required an outflow time of 19 s at 40°C in a TU-4 viscosity cup, the reaction product was cooled and discharged.

### Example 3

(1) 70 parts of a papermaking waste, 90 parts of deionized water, and 120 parts of an aqueous sodium hydroxide solution with a mass percentage of 32% were added to a reactor, then 20 parts of an aqueous formaldehyde solution with a mass percentage of 37% were added at 80°C, and a resulting mixture was incubated at the temperature for 30 min, then cooled to 28°C, and discharged to obtain a modified papermaking waste.
(2) 120 parts of phenol and 50 parts of an aqueous sodium hydroxide solution with a mass percentage of 32% were added to a reactor, and stirred and heated for thorough mixing; and then 210 parts of an aqueous formaldehyde solution with a mass percentage of 37% were added at 60°C, and a resulting mixture was heated to 70°C within 20 min to obtain a material A.
(3) 90 parts of the modified papermaking waste prepared in step (1) were added to the material A, and a reaction was conducted at 85°C; and when a reaction product required an outflow time of 22 s at 40°C in a TU-4 viscosity cup, the reaction product was cooled and discharged.

### Comparative Example 1

60 parts of phenol and 70 parts of an aqueous sodium hydroxide solution with a mass percentage of 32% were added to a reactor, and stirred and heated for thorough mixing; 90 parts of formaldehyde were added at 80°C, and a resulting mixture was heated to 100°C within 10 min; and when a reaction product required an outflow time of 22 s at 40°C in a TU-4 viscosity cup, the reaction product was cooled and discharged. The phenol-formaldehyde resin adhesive required an outflow time of 24 s when tested in a TU-4 viscosity cup at 40°C.

### Comparative Example 2

100 parts of phenol and 10 parts of an aqueous sodium hydroxide solution with a mass percentage of 32% were added to a reactor, and stirred and heated for thorough mixing; 200 parts of formaldehyde were added at 50°C, and a resulting mixture was heated to 90°C within 30 min; and when a reaction product required an outflow time of 19 s at 40°C in a TU-4 viscosity cup, the reaction product was cooled and discharged. The phenol-formaldehyde resin adhesive required an outflow time of 22 s when tested in a TU-4 viscosity cup at 40°C.

### Effect Example:

A manufacturing process of a panel specifically included the following steps:
Glue preparation: A specified amount of the modified phenol-formaldehyde resin adhesive prepared in the above example or the phenol-formaldehyde resin adhesive prepared in the comparative example was thoroughly mixed with an industrial flour of a mass 25% of a mass of the adhesive to obtain a glue for later use.

Glue application: The glue prepared above was poured into a gluing machine, and with a gluing amount of 350 g/m² on each side of a veneer, a 5-layer poplar plywood was assembled through interlayer gluing.

Cold pressing: The assembled poplar plywood was placed into a cold press, and a pressure of 0.6 mPa to 0.8 mPa was applied to conduct cold pressing for 30 min to 50 min.

Hot pressing: The cold-pressed substrate was placed into a hot press to undergo hot pressing at 120°C, 1 min/mm, and 0.8 mPa to 1.0 mPa, and then the pressure was released for 3 min (until the pressure was 0) to obtain the panel. When the modified phenol-formaldehyde resin adhesive prepared in the example was used to manufacture the panel, a hot pressing temperature was 120°C, which was relatively low.

In accordance with GBT 17657-2013, a strength of the obtained panel was tested. In accordance with the national standard GBT 14074-2006, the free aldehyde content in the modified phenol-formaldehyde resin adhesive prepared in the example or the phenol-formaldehyde resin adhesive prepared in the comparative example was tested.

**Table 1**

| Sample | Free aldehyde, % | Strength at 140°C | Strength at 130°C | Strength at 120°C |
|---|---|---|---|---|
| Example 1 | 0.1 | 1.1 | 1.0 | 0.9 |
| Example 2 | 0.12 | 1.08 | 0.95 | 0.89 |
| Example 3 | 0.11 | 1.15 | 0.99 | 0.85 |
| Comparative Example 1 | 0.15 | 1.04 | 0.85 | 0.78 |
| Comparative Example 2 | 0.16 | 0.99 | 0.86 | 0.75 |

## Claims

1. Use of a modified phenol-formaldehyde resin adhesive as an adhesive in the preparation of a flooring base material, wherein the modified phenol-formaldehyde resin adhesive is obtainable by a preparation method comprising the following steps:
(1) mixing a papermaking waste, a catalyst, and water, and subjecting a resulting mixture to a reaction with formaldehyde to obtain a modified papermaking waste;
(2) mixing a mixture of phenol and a catalyst with formaldehyde to allow a reaction to obtain a material A; and
(3) subjecting the material A to a reaction with the modified papermaking waste, and testing a material obtained from the reaction at 40°C using a TU-4 viscosity cup, and when an outflow time is 18 s to 22 s, collecting the material;
wherein steps (1) and (2) are allowed to be conducted in any order and the viscosity is measured according to GB/T1723-93 at 40°C.

2. The use according to claim 1 wherein the preparation method further comprises that in step (1), the papermaking waste is one or more from the group consisting of a papermaking slime pulp, a pulp residue, a bark, a grass powder, a silicon-containing white mud, and a spent pulping liquor; and/or
in step (1), the catalyst is an aqueous sodium hydroxide solution with a mass percentage of 32%; and/or
in step (1), the water is deionized water; and/or
in step (1), when the papermaking waste accounts for 10 parts by weight, the catalyst accounts for 7.1 to 22.5 parts by weight; and/or
in step (1), when the papermaking waste accounts for 10 parts by weight, the water accounts for 10 to 30 parts by weight; and/or
in step (1), when the papermaking waste accounts for 10 parts by weight, the formaldehyde accounts for 0.2 to 3 parts by weight; and/or
in step (1), the formaldehyde is added in the form of an aqueous formaldehyde solution; and/or
in step (1), the reaction is conducted at 50°C to 80°C; and/or
in step (1), the reaction is conducted for 30 min to 120 min; and/or
after step (1) is completed, the preparation method further comprises a cooling treatment.

3. The use according to claim 2 wherein the preparation method further comprises in step (1), the papermaking waste is the spent pulping liquor; and/or
in step (1), when the papermaking waste accounts for 10 parts by weight, the catalyst accounts for 16 to 17.5 parts by weight; and/or
in step (1), when the papermaking waste accounts for 10 parts by weight, the water accounts for 11 to 13 parts by weight; and/or
in step (1), when the papermaking waste accounts for 10 parts by weight, the formaldehyde accounts for 1 to 3 parts by weight; and/or
in step (1), the aqueous formaldehyde solution has a mass percentage of 37%; and/or
in step (1), the reaction is conducted at 50°C to 70°C; and/or
in step (1), the reaction is conducted for 80 min to 120 min; and/or
in step (1), the cooling treatment refers to cooling to 25°C to 30°C and preferably to 28°C to 30°C.

4. The use according to claim1 wherein the preparation method further comprises in step (2), the catalyst is an aqueous sodium hydroxide solution with a mass percentage of 32%; and/or
in step (2), when the modified papermaking waste accounts for 10 parts by weight, the catalyst accounts for 2.2 to 12.5 parts by weight; and/or
in step (2), when the modified papermaking waste accounts for 10 parts by weight, the phenol accounts for 7.7 to 30 parts by weight; and/or
in step (2), when the modified papermaking waste accounts for 10 parts by weight, the formaldehyde accounts for 4 to 19.5 parts by weight; and/or
in step (2), the formaldehyde is added in the form of an aqueous formaldehyde solution; and/or
in step (2), the mixing is conducted at 40°C to 60°C; and/or
in step (2), the reaction is conducted for 20 min to 40 min; and/or
in step (2), the reaction is conducted in a temperature-programmed method.

5. The use according to claim 4 wherein the preparation method further comprises in step (2), when the modified papermaking waste accounts for 10 parts by weight, the catalyst accounts for 5 to 6 parts by weight; and/or
in step (2), when the modified papermaking waste accounts for 10 parts by weight, the phenol accounts for 13 to 18 parts by weight; and/or
in step (2), when the modified papermaking waste accounts for 10 parts by weight, the formaldehyde accounts for 7 to 10 parts by weight; and/or
in step (2), the aqueous formaldehyde solution has a mass percentage of 37%; and/or
in step (2), the mixing is conducted at 40°C to 50°C; and/or
in step (2), the reaction is conducted for 30 min to 40 min; and/or
in step (2), the temperature-programmed method comprises: raising a temperature to 70°C to 90°C within 20 min to 40 min and preferably to 80°C to 90°C within 20 min to 40 min.

6. The use according to any one of claims 1 to 5 wherein the preparation method further comprises in step (3), the reaction is conducted at 85°C to 100°C; and/or
after the reaction is completed, step (3) further comprises a cooling treatment.

7. The use according to claim 6 wherein the preparation method further comprises in step (3), the reaction is conducted at 90°C to 100°C; and/or
the cooling treatment refers to cooling to 30°C to 40°C.

## Patentansprüche

1. Verwendung eines modifizierten Phenol-Formaldehyd-Harzklebstoffs als ein Klebstoff bei der Herstellung eines Bodenbelagbasismaterials, wobei der modifizierte Phenol-Formaldehyd-Harzklebstoff durch ein Herstellungsverfahren erhaltbar ist, das die folgenden Schritte umfasst:
(1) Mischen eines Papierherstellungsabfalls, eines Katalysators und von Wasser und Aussetzen einer resultierenden Mischung mit einer Reaktion mit Formaldehyd, um einen modifizierten Papierherstellungsabfall zu erhalten;
(2) Mischen einer Mischung aus Phenol und einem Katalysator mit Formaldehyd, um eine Reaktion zu ermöglichen, um ein Material A zu erhalten; und
(3) Aussetzen des Materials A mit einer Reaktion mit dem modifizierten Papierherstellungsabfall und Testen eines Materials, das aus der Reaktion erhalten wird, bei 40 °C mit einem TU-4-Viskositätsbecher, und bei einer Ausflusszeit von 18 s bis 22 s, Sammeln des Materials;
wobei die Schritte (1) und (2) in beliebiger Reihenfolge durchgeführt werden dürfen und die Viskosität gemäß GB/T1723-93 bei 40 °C gemessen wird.

2. Verwendung nach Anspruch 1, wobei das Herstellungsverfahren weiter umfasst, dass der Papierherstellungsabfall in Schritt (1) einer oder mehrere aus der Gruppe ist, der/die aus einem Schleimzellstoff für die Papierherstellung, einem Zellstoffrückstand, einer Rinde, einem Graspulver, einem siliziumhaltigen Weißschlamm und einer verbrauchten Aufschlusslauge besteht/bestehen; und/oder
in Schritt (1) der Katalysator eine wässrige Natriumhydroxidlösung mit einem Massenprozentsatz von 32 % ist; und/oder
in Schritt (1) das Wasser deionisiertes Wasser ist; und/oder
in Schritt (1), wenn der Papierherstellungsabfall 10 Gewichtsanteile ausmacht, der Katalysator 7,1 bis 22,5 Gewichtsanteile ausmacht; und/oder
in Schritt (1), wenn der Papierherstellungsabfall 10 Gewichtsanteile ausmacht, das Wasser 10 bis 30 Gewichtsanteile ausmacht; und/oder
in Schritt (1), wenn der Papierherstellungsabfall 10 Gewichtsanteile ausmacht, das Formaldehyd 0,2 bis 3 Gewichtsanteile ausmacht; und/oder
in Schritt (1) das Formaldehyd in Form einer wässrigen Formaldehydlösung zugegeben wird; und/oder
in Schritt (1) die Reaktion bei 50 °C bis 80 °C durchgeführt wird; und/oder
in Schritt (1) die Reaktion für 30 min bis 120 min durchgeführt wird; und/oder
nach Abschließen von Schritt (1) das Herstellungsverfahren weiter eine Kühlbehandlung umfasst.

3. Verwendung nach Anspruch 2, wobei das Herstellungsverfahren in Schritt (1) weiter umfasst, dass der Papierherstellungsabfall die verbrauchte Aufschlusslauge ist; und/oder
in Schritt (1), wenn der Papierherstellungsabfall 10 Gewichtsanteile ausmacht, der Katalysator 16 bis 17,5 Gewichtsanteile ausmacht; und/oder
in Schritt (1), wenn der Papierherstellungsabfall 10 Gewichtsanteile ausmacht, das Wasser 11 bis 13 Gewichtsanteile ausmacht; und/oder
in Schritt (1), wenn der Papierherstellungsabfall 10 Gewichtsanteile ausmacht, das Formaldehyd 1 bis 3 Gewichtsanteile ausmacht; und/oder
in Schritt (1) die wässrige Formaldehydlösung einen Massenprozentsatz von 37 % aufweist; und/oder
in Schritt (1) die Reaktion bei 50 °C bis 70 °C durchgeführt wird; und/oder
in Schritt (1) die Reaktion für 80 min bis 120 min durchgeführt wird; und/oder
in Schritt (1) die Kühlbehandlung das Kühlen auf 25 °C bis 30 °C und bevorzugt auf 28 °C bis 30 °C betrifft.

4. Verwendung nach Anspruch 1, wobei das Herstellungsverfahren in Schritt (2) weiter umfasst, dass der Katalysator eine wässrige Natriumhydroxidlösung mit einem Massenprozentsatz von 32 % ist; und/oder
in Schritt (2), wenn der modifizierte Papierherstellungsabfall 10 Gewichtsanteile ausmacht, der Katalysator 2,2 bis 12,5 Gewichtsanteile ausmacht; und/oder
in Schritt (2), wenn der modifizierte Papierherstellungsabfall 10 Gewichtsanteile ausmacht, das Phenol 7,7 bis 30 Gewichtsanteile ausmacht; und/oder
in Schritt (2), wenn der modifizierte Papierherstellungsabfall 10 Gewichtsanteile ausmacht, das Formaldehyd 4 bis 19,5 Gewichtsanteile ausmacht; und/oder
in Schritt (2) das Formaldehyd in Form einer wässrigen Formaldehydlösung zugegeben wird; und/oder
in Schritt (2) das Mischen bei 40 °C bis 60 °C durchgeführt; und/oder
in Schritt (2) die Reaktion für 20 mn bis 40 mn durchgeführt wird; und/oder
in Schritt (2) die Reaktion in einem temperaturprogrammierten Verfahren durchgeführt wird.

5. Verwendung nach Anspruch 4, wobei das Herstellungsverfahren in Schritt (2) weiter umfasst, dass, wenn der modifizierte Papierherstellungsabfall 10 Gewichtsanteile ausmacht, der Katalysator 5 bis 6 Gewichtsanteile ausmacht; und/oder
in Schritt (2), wenn der modifizierte Papierherstellungsabfall 10 Gewichtsanteile ausmacht, das Phenol 13 bis 18 Gewichtsanteile ausmacht; und/oder
in Schritt (2), wenn der modifizierte Papierherstellungsabfall 10 Gewichtsanteile ausmacht, das Formaldehyd 7 bis 10 Gewichtsanteile ausmacht; und/oder
in Schritt (2) die wässrige Formaldehydlösung einen Massenprozentsatz von 37 % aufweist; und/oder
in Schritt (2) das Mischen bei 40 °C bis 50 °C durchgeführt wird; und/oder
in Schritt (2) die Reaktion für 30 min bis 40 min durchgeführt wird; und/oder
in Schritt (2) das temperaturprogrammierte Verfahren: Erhöhen einer Temperatur auf 70 °C bis 90 °C innerhalb von 20 min bis 40 min und bevorzugt auf 80 °C bis 90 °C innerhalb von 20 min bis 40 min umfasst.

6. Verwendung nach einem der Ansprüche 1 bis 5, wobei das Herstellungsverfahren weiter in Schritt (3) das Durchführen der Reaktion bei 85 °C bis 100 °C umfasst; und/oder
nach Abschließen der Reaktion, Schritt (3) weiter eine Kühlbehandlung umfasst.

7. Verwendung nach Anspruch 6, wobei das Herstellungsverfahren Schritt (3) weiter das Durchführen der Reaktion bei 90 °C bis 100 °C umfasst; und/oder
die Kühlbehandlung das Kühlen auf 30 °C bis 40 °C betrifft.

## Revendications

1. Utilisation d'un adhésif de résine phénol-formaldéhyde modifiée comme un adhésif dans la préparation d'un matériau de base de revêtement, dans laquelle l'adhésif de résine phénol-formaldéhyde modifiée peut être obtenu par un procédé de préparation comprenant les étapes suivantes :
(1) mélanger des déchets de fabrication de papier, un catalyseur et de l'eau, et soumettre un mélange résultant à une réaction avec du formaldéhyde pour obtenir des déchets modifiés de fabrication de papier ;
(2) mélanger un mélange de phénol et d'un catalyseur avec du formaldéhyde pour permettre une réaction pour obtenir un matériau A ; et
(3) soumettre le matériau A à une réaction avec les déchets modifiés de fabrication de papier, et tester un matériau A obtenu à partir de la réaction à 40°C en utilisant une tasse de viscosité TU-4, et lorsqu'un temps de sortie est de 18 s à 22 s, collecter le matériau ;
dans laquelle les étapes (1) et (2) peuvent être réalisées dans n'importe quel ordre et la viscosité est mesurée selon GB/T1723-93 à 40°C.

2. Utilisation selon la revendication 1, dans laquelle le procédé de préparation comprend en outre, à l'étape (1), les déchets de fabrication de papier sont un ou plusieurs du groupe constitué d'une pâte de boue de fabrication de papier, d'un résidu de pâte, d'une écorce, d'une poudre d'herbe, d'une boue blanche contenant du silicium et d'une liqueur de cuisson usée ; et/ou
à l'étape (1), le catalyseur est une solution aqueuse d'hydroxyde de sodium avec un pourcentage en masse de 32% ; et/ou
à l'étape (1), l'eau est de l'eau désionisée ; et/ou
à l'étape (1), lorsque les déchets de fabrication de papier représentent 10 parties en poids, le catalyseur représente 7,1 à 22,5 parties en poids ; et/ou
à l'étape (1), lorsque les déchets de fabrication de papier représentent 10 parties en poids, l'eau représente 10 à 30 parties en poids ; et/ou
à l'étape (1), lorsque les déchets de fabrication de papier représentent 10 parties en poids, le formaldéhyde représente 0,2 à 3 parties en poids ; et/ou
à l'étape (1), le formaldéhyde est ajouté sous la forme d'une solution aqueuse de formaldéhyde ; et/ou
à l'étape (1), la réaction est conduite à 50°C à 80°C ; et/ou
à l'étape (1), la réaction est conduite pendant 30 min à 120 min ; et/ou
après que l'étape (1) est finie, le procédé de préparation comprend en outre un traitement de refroidissement.

3. Utilisation selon la revendication 2, dans laquelle le procédé de préparation comprend en outre, à l'étape (1), les déchets de fabrication de papier sont la liqueur de cuisson usée ; et/ou
à l'étape (1), lorsque les déchets de fabrication de papier représentent 10 parties en poids, le catalyseur représente 16 à 17,5 parties en poids ; et/ou
à l'étape (1), lorsque les déchets de fabrication de papier représentent 10 parties en poids, l'eau représente 11 à 13 parties en poids ; et/ou
à l'étape (1), lorsque les déchets de fabrication de papier représentent 10 parties en poids, le formaldéhyde représente 1 à 3 parties en poids ; et/ou
à l'étape (1), la solution aqueuse de formaldéhyde a un pourcentage en masse de 37% ; et/ou
à l'étape (1), la réaction est conduite à 50°C à 70°C ; et/ou
à l'étape (1), la réaction est conduite pendant 80 min à 120 min ; et/ou
à l'étape (1), le traitement de refroidissement fait référence à un refroidissement à 25°C à 30°C et de préférence à 28°C à 30°C.

4. Utilisation selon la revendication 1, dans laquelle le procédé de préparation comprend en outre, à l'étape (2), le catalyseur est une solution aqueuse d'hydroxyde de sodium avec un pourcentage en masse de 32% ; et/ou
à l'étape (2), lorsque les déchets modifiés de fabrication de papier représentent 10 parties en poids, le catalyseur représente 2,2 à 12,5 parties en poids ; et/ou
à l'étape (2), lorsque les déchets modifiés de fabrication de papier représentent 10 parties en poids, le phénol représente 7,7 à 30 parties en poids ; et/ou
à l'étape (2), lorsque les déchets modifiés de fabrication de papier représentent 10 parties en poids, le formaldéhyde représente 4 à 19,5 parties en poids ; et/ou
à l'étape (2), le formaldéhyde est ajouté sous la forme d'une solution aqueuse de formaldéhyde ; et/ou
à l'étape (2), le mélange est conduit à 40°C à 60°C ; et/ou
à l'étape (2), la réaction est conduite pendant 20 min à 40 min ; et/ou
à l'étape (2), la réaction est conduite dans un procédé programmé en température.

5. Utilisation selon la revendication 4, dans laquelle le procédé de préparation comprend en outre, à l'étape (2), lorsque les déchets modifiés de fabrication de papier représentent 10 parties en poids, le catalyseur représente 5 à 6 parties en poids ; et/ou
à l'étape (2), lorsque les déchets modifiés de fabrication de papier représentent 10 parties en poids, le phénol représente 13 à 18 parties en poids ; et/ou
à l'étape (2), lorsque les déchets modifiés de fabrication de papier représentent 10 parties en poids, le formaldéhyde représente 7 à 10 parties en poids ; et/ou
à l'étape (2), la solution aqueuse de formaldéhyde a un pourcentage en masse de 37% ; et/ou
à l'étape (2), le mélange est conduit à 40°C à 50°C ; et/ou
à l'étape (2), la réaction est conduite pendant 30 min à 40 min ; et/ou
à l'étape (2), le procédé programmé en température comprend : l'élévation d'une température à 70°C à 90°C en 20 min à 40 min et de préférence à 80°C à 90°C en 20 min à 40 min.

6. Utilisation selon l'une quelconque des revendications 1 à 5, dans laquelle le procédé de préparation comprend en outre, à l'étape (3), la réaction est conduite à 85°C à 100°C ; et/ou
après que la réaction est finie, l'étape (3) comprend en outre un traitement de refroidissement.

7. Utilisation selon la revendication 6, dans laquelle le procédé de préparation comprend en outre, à l'étape (3), la réaction est conduite à 90°C à 100°C ; et/ou
le traitement de refroidissement fait référence à un refroidissement à 30°C à 40°C.
